# FASCICULE DE BREVET EUROPEEN

(11) **EP 0 665 369 B1**
(45) Date de publication et mention de la délivrance du brevet: **09.07.1997**
(21) Numéro de dépôt: 95400083.2
(22) Date de dépôt: 17.01.1995
(51) Int. Cl.: F02D 13/02, F02D 33/02

(54) **Procédé et dispositif de commande de l'arrêt d'un moteur deux temps à auto-allumage**
Vorrichtung und Verfahren zum Anhalten einer Zweitaktbrennkraftmaschine mit Selbstzündung
Device and method for stopping a two-stroke internal combustion engine with autoignition

(30) Priorité: 31.01.1994 FR 9401124
(43) Date de publication de la demande: 02.08.1995
(73) Titulaire: INSTITUT FRANCAIS DU PETROLE, 92506 Rueil-Malmaison (FR)
(72) Inventeur: Duret, Pierre, F-78500 Sartrouville (FR)

(56) Documents cités:
- DE-A- 4 010 940
- US-A- 4 385 602
- US-A- 4 388 894
- US-A- 4 445 468
- US-A- 4 452 203
- US-A- 5 094 206
- US-A- 5 239 970

## Description

La présente invention concerne les moteurs deux temps fonctionnant selon le principe de l'auto-allumage ou auto-inflammation de la charge.

Les moteurs de ce type comportent généralement des moyens destinés à introduire des gaz frais dans la chambre de combustion d'un moteur le plus lentement possible et avec le moins de turbulence possible, afin de réduire le mélange de ces gaz frais avec les gas brûlés résiduels présents dans la chambre de combustion. Du fait de la grande quantité de gaz résiduels présente à faible charge, leur température élevée, lorsque le mélange avec les gaz frais est réduit, permet d'obtenir un processus d'auto-inflammation.

Cependant à faibles charges il est souvent difficile de maintenir une combustion stable, de sorte que l'efficacité thermique est réduite et les rejets de composants nocifs à l'échappement sont accrus.

Différentes solutions à ce problème ont déjà été proposées. Ainsi le brevet US 4 445 468 enseigne un processus qui permet de stratifier la charge tout en maintenant un mélange combustible à une température optimale pour l'auto-inflammation à faibles charges.

Le brevet US 4 242 993 illustre une autre façon d'entretenir et d'améliorer l'auto-inflammation dans un moteur deux temps.

D'autres façons de s'approcher des conditions de l'auto-inflammations sont décrites dans les documents FR 2 621 648, FR 2 649 157, FR 2 663 081 ou encore FR 2 693 233, déposés au nom du Demandeur.

Comme le montre l'ensemble des brevets de l'art antérieur cités ci-avant, la combustion à auto-allumage peut exister dans des moteurs deux temps à alimentation mécanique de carburant c'est-à-dire avec système de dosage de type carburateur.

L'auto-allumage peut également être présent dans des moteurs à injection électronique c'est-à-dire dont l'alimentation en carburant est contrôlée électroniquement, et dont l'injection peut se faire directement dans la chambre de combustion.

Les progrès obtenus sur ce type de procédé de combustion font qu'on peut aujourd'hui envisager de l'utiliser dans les conditions de charge et régimes les plus faibles, voire jusqu'au régime de ralenti.

Dans ces conditions, il apparaît que lorsque l'on veut arrêter un moteur deux temps fonctionnant avec le procédé de combustion en auto-inflammation, l'arrêt du système d'allumage commandé (par bougie) généralement utilisé sur un moteur conventionnel n'a plus d'effet pour arrêter le moteur. Il se pose donc un problème au niveau de l'arrêt du moteur dans ces conditions de fonctionnement.

Une solution pour les moteurs à injection électronique de carburant directement dans la chambre de combustion est de couper leur alimentation en carburant, le moteur s'arrêtant de ce fait immédiatement.

Par contre dans les moteurs deux temps à carburateur, ou à système de dosage mécanique de carburant ou éventuellement à système de dosage électronique de carburant avec injection non directe dans la chambre, il devient beaucoup plus difficile d'arrêter le moteur.

L'objet de l'invention est notamment de proposer une solution pour ces derniers types de moteur, solution qui permet un arrêt immédiat du moteur.

Ainsi l'invention a pour objet un procédé de commande de l'arrêt d'un moteur deux temps fonctionnant en auto-allumage comprenant au moins un élément destiné au contrôle aérodynamique de la charge dans une chambre de combustion.

Selon l'invention, le procédé consiste à désactiver au moins ledit élément de contrôle simultanément à l'arrêt de l'allumage.

Selon un mode de réalisation de l'invention, le procédé consiste à augmenter la section de passage des conduits destinés à introduire une charge carburée et/ou non carburée dans le moteur.

Selon un autre mode de réalisation de l'invention, le procédé consiste à obtenir une diminution de la longueur des conduits destinés à introduire une charge non carburée dans le moteur.

Sans sortir du cadre de l'invention, le procédé peut s'appliquer à un moteur comprenant un carter pompe et consister alors à diminuer le volume dudit carter-pompe.

De façon différente, le procédé selon l'invention peut consister à augmenter la section de passage du ou des conduits destinés à l'échappement des gaz brûlés.

L'invention vise en outre un dispositif destiné à commander l'arrêt immédiat d'un moteur deux temps fonctionnant en auto-allumage, comprenant au moins un élément destiné au contrôle aérodynamique de la charge dans une chambre de combustion et un moyen d'arrêt de l'allumage. Selon l'invention ledit moyen d'arrêt de l'allumage agit simultanément à la désactivation dudit moyen de contrôle de l'aérodynamique de la charge afin de réaliser l'arrêt instantané du moteur.

L'invention sera mieux comprise, d'autres détails et particularités apparaîtront à la lecture de la description qui va suivre, faite à titre illustratif et nullement limitatif, de l'invention en référence aux figures annexées selon lesquelles :

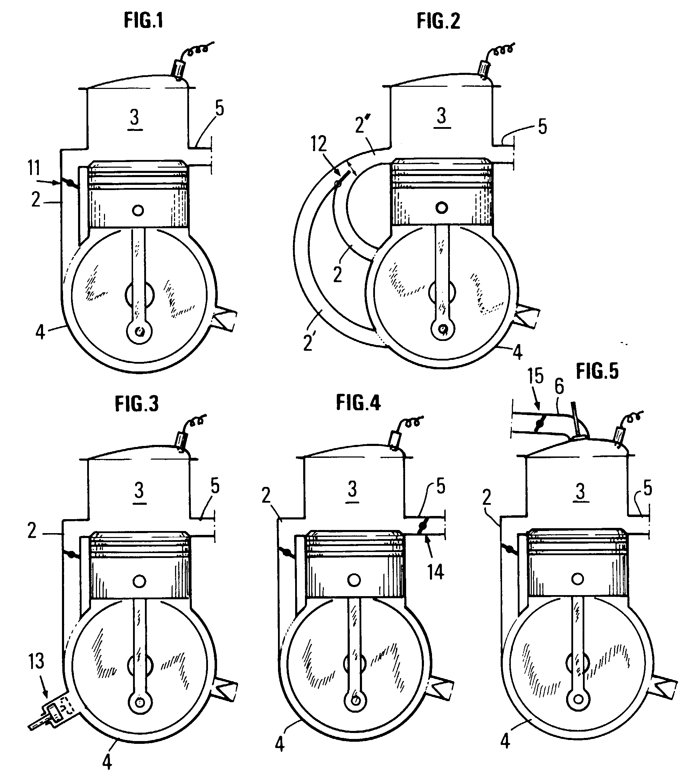

- Les figures 1 à 5 montrent chacune, en coupe longitunale simplifiée, un moteur deux temps muni d'au moins un moyen de contrôle de l'aérodynamique interne de la chambre de combustion.

Sur la figure 1 ledit moyen de contrôle 11 est placé dans l'un au moins des conduits de transfert 2. Ce moyen de contrôle 11 peut être un volet ou un boisseau rotatif ou tout autre moyen capable de modifier la section de passage du conduit de transfert 2 en fonction de certains paramètres de fonctionnement du moteur. Il s'agit, dans ce mode de réalisation de l'invention, de contrôler la vitesse d'introduction des gaz frais dans la chambre de combustion 3.

Les gaz frais peuvent être fournis soit par un carter-pompe (cas de la figure 1) soit par toute autre source d'alimentation en gaz frais (compresseur externe, turbo-compresseur,...).

Un autre moyen de contrôle de la vitesse d'introduction des gaz frais est montré sur la figure 2 sur laquelle on peut voir un double conduit de transfert 2,2'. Selon cet exemple chaque conduit de transfert débouche par l'une de ses extrémités dans le carter-pompe 4 et par l'autre extrémité dans une zone de jonction 2" qui elle-même débouche directement dans la chambre de combustion 3 ; le moyen de contrôle 12 comprend, selon ce mode de réalisation de l'invention, un volet situé dans la zone de jonction 2" des deux conduits. Le volet permet d'obturer sélectivement l'un ou l'autre des conduits 2,2'. De façon particulièrement avantageuse, les deux conduits 2,2' n'ont pas la même longueur, de sorte que pour les faibles charges l'on choisira d'obturer le conduit de plus faible longueur. L'air frais issu du carter-pompe 4 transitera alors par le conduit de plus grande longueur, donc avec une vitesse plus faible. A contrario, pour les fortes charges, le volet 12 obturera le conduit de plus grande longueur et les gaz frais passeront à travers le conduit de plus faible longueur.

Selon la figure 3, le contrôle de l'aérodynamique interne de la chambre de combustion 3 est réalisé par une variation du volume du carter-pompe 4. Le moyen 13 utilisé pour réaliser cette variation peut être un piston ou une membrane déplaçable dans un petit volume annexe au carter-pompe 4.

Ainsi à forte charge et à régime élevé, le moyen 13 sera placé dans une position donnant un volume minimal pour le carter-pompe. Une autre position du moyen 13 rendra le volume carter-pompe maximal ce qui entrainera un ralentissement dans l'introduction des gaz frais dans le cylindre. Cette autre position sera donc choisie en fonctionnement à faible charge et/ou bas régime.

Selon la figure 4, le contrôle de l'aéro-dynamique est réalisé via le contrôle de la section de passage de la (ou des) tubulure(s) d'échappement 5. Un volet, boisseau 14 ou tout autre moyen susceptible de remplir cette fonction est alors avantageusement placé à l'entrée de la tubulure 5. Le même principe de fonctionnement que celui décrit en relation avec la figure 1 s'applique ici, à savoir que le moyen 15 définit une faible section de passage pour les faibles charges et une section de passage maximale pour les régimes à forte charge.

La figure 5 représente un mode de réalisation selon lequel le contrôle aérodynamique de la charge est opéré grâce à un organe de restriction 15 (de type vanne ou boisseau par exemple) du conduit 6 alimenté en mélange carburé et débouchant directement dans la chambre de combustion 3.

La commande conventionnelle de l'organe 15 est telle qu'une faible vitesse d'introduction des gaz est recherchée pour les faibles charges et faibles régimes et l'inverse pour les charges et régimes opposés.

Le principe de fonctionnement selon la présente invention consiste, lorsque l'on souhaite arrêter le moteur, non seulement à couper l'allumage mais en outre, et simultanément, à désactiver (ou inverser) le (ou les) moyen(s) de contrôle de l'aérodynamique interne, moyen qui était nécessaire pour maintenir la combustion par auto-inflammation.

La façon la plus simple et la plus fiable pour réaliser cette double fonction consiste à utiliser le même organe de commande pour commander l'arrêt de l'allumage et pour désactiver le (ou les) moyen(s) de contrôle. En d'autres termes, l'organe qui commande l'arrêt du moteur présente selon l'invention la fonction supplémentaire de désactiver le (ou les) moyens de contrôle de l'aérodynamique.

Sans sortir du cadre de l'invention, l'organe de commande de l'arrêt de l'allumage peut être relié directement à un autre organe qui, simultanément, commande la désactivation des moyens de contrôle aérodynamiques.

Cet organe peut être de type mécanique ou électronique.

De façon plus précise, l'invention consistera lorsque l'on souhaite arrêter de façon immédiate le moteur :
- pour le mode de réalisation selon la figure 1 à revenir à une section de passage des transferts maximale, alors que cette section était minimale à faibles charges;
- pour le mode de réalisation selon la figure 2, l'invention consiste à obturer la section du (ou des) conduit(s) de transfert le plus long afin de découvrir le (ou les) conduit(s) le plus court;
- pour le mode de réalisation selon la figure 3, on modifiera la position de l'organe de contrôle 13 de façon à obtenir le volume carter-pompe le plus faible possible;
- concernant le mode de réalisation illustré par la figure 4, on cherchera à avoir la plus grande section de passage à l'échappement;
- lorsque l'invention s'applique au mode de réalisation selon la figure 5 c'est-à-dire à un moteur à injection pneumatique, le moyen de contrôle 15 sera orienté de façon à avoir un débit et une vitesse maximale d'introduction du mélange carburé.

Les exemples précités montrent bien que l'invention prévoit, pour obtenir un arrêt instantané du moteur, de désactiver c'est-à-dire en fait d'inverser la position de l'organe de contrôle de l'aérodynamique, vis-à-vis du régime de ralenti ou de faibles charges qui (généralement) précède l'arrêt.

## Revendications

1. Procédé de commande de l'arrêt d'un moteur deux temps fonctionnant en auto-allumage comprenant au moins un élément (11 ; 12 ; 13 ; 14 ; 15) destiné au contrôle aérodynamique de la charge dans une chambre de combustion (3), caractérisé en ce qu'il consiste à désactiver au moins ledit élément de contrôle simultanément à l'arrêt de l'allumage.

2. Procédé selon la revendication 1, caractérisé en ce qu'il consiste à augmenter la section de passage des conduits (2 ; 6) destinés à introduire une charge carburée et/ou non carburée dans le moteur.

3. Procédé selon la revendication 1, caractérisé en ce qu'il consiste à obtenir une diminution de la longueur des conduits (2,2') destinés à introduire une charge non carburée dans le moteur.

4. Procédé selon la revendication 1, ledit moteur comprenant un carter-pompe caractérisé en ce qu'il consiste à diminuer le volume du carter-pompe (4).

5. Procédé selon la revendication 1, caractérisé en ce qu'il consiste à augmenter la section de passage du ou des conduits (5) destiné à l'échappement des gaz brûlés.

6. Dispositif destiné à commander l'arrêt immédiat d'un moteur deux temps fonctionnant en auto-allumage, comprenant au moins un élément destiné au contrôle aérodynamique de la charge dans une chambre de combustion (3) et un moyen d'arrêt de l'allumage, caractérisé en ce que ledit moyen d'arrêt de l'allumage agit simultanément à la désactivation dudit moyen de contrôle (11 ; 12 ; 13 ; 14 ; 15) de l'aérodynamique de la charge afin de réaliser l'arrêt instantané du moteur.

7. Dispositif selon la revendication 6, caractérisé en ce que ledit moyen d'arrêt de l'allumage inverse la position dudit organe de contrôle (11 ; 12 ; 13 ; 14 ; 15) vis-à-vis de la position de l'organe de contrôle au ralenti.

## Patentansprüche

1. Verfahren zur Vornahme des Betriebsstillstandes eines Zweitakt-Motors, der mit Selbstzündung arbeitet, welcher wenigstens ein zur aerodynamischen Steuerung der Charge in einer Brennkammer (3) bestimmtes Element (11; 12; 13; 14; 15) umfaßt, dadurch gekennzeichnet, daß es darin besteht, wenigstens das Element zur Steuerung gleichzeitig mit der Unterbrechung der Zündung zu deaktivieren.

2. Verfahren nach Anspruch 1, dadurch gekennzeichnet, daß es darin besteht, den Strömungsquerschnitt der Leitungen (2; 6), die dazu bestimmt sind, eine kohlenwasserstoffhaltige und/oder nicht-kohlenwasserstoffhaltige Charge in den Motor einzuführen, zu vergrößern.

3. Verfahren nach Anspruch 1, dadurch gekennzeichnet, daß es darin besteht, eine Verminderung der Länge der Leitungen (2, 2'), die dazu bestimmt sind, eine nicht-kohlenwasserstoffhaltige Charge in den Motor einzuführen, zu erhalten.

4. Verfahren nach Anspruch 1, wobei der Motor eine Gehäuse-Pumpe umfaßt, dadurch gekennzeichnet, daß es darin besteht, das Volumen der Gehäuse-Pumpe (4) zu verkleinern.

5. Verfahren nach Anspruch 1, dadurch gekennzeichnet, daß es darin besteht, den Strömungsquerschnitt der Leitung(en) (5), die zum Auslaß der Abgase bestimmt sind, zu vergrößern.

6. Vorrichtung, die dazu bestimmt ist, den sofortigen Betriebsstillstand eines Zweitakt-Motors, der mit Selbstzündung arbeitet, vorzunehmen, welcher wenigstens ein zur aerodynamischen Steuerung der Charge in einer Brennkammer (3) bestimmtes Element und eine Einrichtung zur Unterbrechung der Zündung umfaßt, dadurch gekennzeichnet, daß die Einrichtung zur Unterbrechung der Zündung gleichzeitig mit der Deaktivierung der Einrichtung (11; 12; 13; 14; 15) zur Steuerung der Aerodynamik der Charge wirkt, um den sofortigen Betriebsstillstand des Motors zu realisieren.

7. Vorrichtung nach Anspruch 6, dadurch gekennzeichnet, daß die Einrichtung zur Unterbrechung der Zündung die Position des Organs (11; 12; 13; 14; 15) zur Steuerung gegenüber der Position des Organs zur Steuerung im Leerlauf umkehrt.

## Claims

1. A method of controlling the stoppage of a self-ignition two-stroke engine having at least one element (11 ; 12 ; 13 ; 14 ; 15) for the purpose of aerodynamically controlling the charge supplied to a combustion chamber (3), characterised in that it consists in de-activating at least the said control element at the same time as the self-ignition process is stopped.

2. A method as claimed in claim 1, characterised in that it consists in increasing the passage section of passages ( 2 ; 6) used to supply a carburetted and/or non-carburetted charge to the engine.

3. A method as claimed in claim 1, characterised in that it consists in reducing the length of passages (2,2') used to supply a non-carburetted charge to the engine.

4. A method as claimed in claim 1, wherein the said engine has a crankcase, characterised in that it consists in reducing the volume of the crankcase (4).

5. A method as claimed in claim 1, characterised in that it consists in increasing the passage section of a passage or passages (5) used for discharging burned gases.

6. A device designed to control the immediate stoppage of a self-ignition two-stroke engine, having at least one element for the purpose of aerodynamically controlling the charge supplied to a combustion chamber (3) and a means for stopping ignition, characterised in that the said means for stopping the ignition simultaneously de-activates the said means (11 ; 12 ; 13 ; 14 ; 15) which aerodynamically control the charge in order to stop the engine instantly.

7. A device as claimed in claim 6, characterised in that the said means for stopping the ignition inverses the position of the said control member (11 ; 12; 13 ; 14; 15) relative to the position of the control member during idling.
